# EUROPEAN PATENT APPLICATION

(11) **EP 4 546 896 A1**
(43) Date of publication of application: **30.04.2025**
(21) Application number: 22947358.2
(22) Date of filing: 23.06.2022
(51) Int. Cl.: H04W 56/00, H04L 5/00

(54) **VALIDATION TIME ACQUISITION METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/100931
(87) International publication number: WO 2023/245587

(57) **Abstract**

Disclosed in the embodiments of the present application are a validation time acquisition method and apparatus. The method comprises: receiving first indication information sent by a network device, wherein the first indication information is used for indicating an acquisition mode for a validation time of first information, and the acquisition mode comprises a first mode and a second mode. Thus, a terminal device can be certain about an acquisition mode for a validation time of first information according to an indication and flexibly configure the acquisition mode for the validation time, such that the efficiency of information transmission can be effectively increased, the transmission robustness of a communication system can be improved, and when SI is updated, it is also possible to ensure that a network device and the terminal device reach a consensus regarding a validation time of the updated SI.

## Description

### TECHNICAL FIELD

The disclosure relates to the field of communication technologies, in particular to a validation duration acquisition method and a validation duration acquisition apparatus.

### BACKGROUND

In the scene of satellite communication, there is a longer signal transmission distance between a transmitter and a receiver, which leads to a larger delay in data transmission. For transmissions with uplink-downlink relationships, a terminal may compensate a transmission delay by ephemeris information and related information of common timing advance (common TA). The ephemeris information and common TA information are notified to the terminal through system information. In the related art, the terminal may believe that the previously acquired ephemeris information and the common TA information are available within a validation duration.

### SUMMARY

According to a first aspect of embodiments of the disclosure, a validation duration acquisition method is provided. The method is performed by a terminal, and includes:
receiving first indication information sent by a network device;
in which the first indication information is configured to indicate an acquisition mode of a validation time of first information, and the acquisition mode comprises a first mode and a second mode.

Optionally, the method further includes:
receiving system information (SI) sent by the network device; and
determining the validation time of the first information according to a signaling carried in the SI;
in which the acquisition mode is the first mode.

Optionally, the method further includes:
receiving SI sent by the network device;
determining the validation time of the first information according to an end position of an SI window where the SI is located;
in which the acquisition mode is the second mode.

Optionally, the method further includes:
merging and receiving the SI through at least one SI window.

Optionally, the method further includes:
receiving the SI independently through each SI window in at least one SI window.

Optionally, the method further includes:
receiving second indication information sent by the network device;
in which the second indication information is configured to indicate that the validation time of the first information is acquired within a first time domain range via the first mode, and/or
indicate that the validation time of the first information is acquired within a second time domain range via the second mode.

Optionally, the second indication information is also configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is included in an SI block type 1 (SIB1).

Optionally, the first mode is an explicit acquisition mode, and the second mode is an implicit acquisition mode.

According to a second aspect of embodiments of the disclosure, a validation duration acquisition method is provided. The method is performed by a network device, and includes:
sending first indication information to a terminal;
in which the first indication information is configured to indicate an acquisition mode of a validation time of first information, and the acquisition mode comprises a first mode and a second mode.

Optionally, the method further includes:
sending SI to the terminal;
in which the SI carries a signaling, the signaling is configured to determine the validation time of the first information; and
in which the acquisition mode is the first mode.

Optionally, the method further includes:
sending SI to the terminal;
in which an end position of an SI window where the SI is located is configured to determine the validation time of the first information; and
in which the acquisition mode is the second mode.

Optionally, the method further includes:
sending the SI to the terminal through at least one SI window;
in which the at least one SI window is configured for merging and receiving the SI.

Optionally, the method further includes:
sending the SI to the terminal through at least one SI window;
in which the at least one SI window is configured for receiving the SI independently.

Optionally, the method further includes:
sending second indication information to the terminal;
in which the second indication information is configured to indicate that the validation time of the first information is acquired within a first time domain range via the first mode, and/or
indicate that the validation time of the first information is acquired within a second time domain range via the second mode.

Optionally, the second indication information is also configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is included in an SIB1.

Optionally, the first mode is an explicit acquisition mode, and the second mode is an implicit acquisition mode.

According to a third aspect of embodiments of the disclosure, a validation duration acquisition apparatus is provided. The apparatus is applied to a terminal, and includes:
a transceiver unit, configured to receive first indication information sent by a network device;
in which the first indication information is configured to indicate an acquisition mode of a validation time of first information, and the acquisition mode comprises a first mode and a second mode.

Optionally, the transceiver unit is further configured to:
receive SI sent by the network device; and
determine the validation time of the first information according to a signaling carried in the SI;
in which the acquisition mode is the first mode.

Optionally, the transceiver unit is further configured to:
receive SI sent by the network device;
determining the validation time of the first information according to an end position of an SI window where the SI is located;
in which the acquisition mode is the second mode.

Optionally, the transceiver unit is further configured to:
merge and receive the SI through at least one SI window.

Optionally, the transceiver unit is further configured to:
receive the SI independently through each SI window in at least one SI window.

Optionally, the transceiver unit is further configured to:
receive second indication information sent by the network device;
in which the second indication information is configured to indicate that the validation time of the first information is acquired within a first time domain range via the first mode, and/or
indicate that the validation duration of the first information is acquired within a second time domain range via the second mode.

Optionally, the second indication information is also configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is included in an SIB1.

Optionally, the first mode is an explicit acquisition mode, and the second mode is an implicit acquisition mode.

According to a fourth aspect of embodiments of the disclosure, a validation duration acquisition apparatus is provided. The apparatus is applied to a network device, and includes:
a transceiver unit, configured to send first indication information to a terminal;
in which the first indication information is configured to indicate an acquisition mode of a validation time of first information, and the acquisition mode comprises a first mode and a second mode.

Optionally, the transceiver unit is further configured to:
send SI to the terminal;
in which the SI carries a signaling, the signaling is configured to determine the validation time of the first information; and
in which the acquisition mode is the first mode.

Optionally, the transceiver unit is further configured to:
send SI to the terminal;
in which an end position of an SI window where the SI is located is configured to determine the validation time of the first information; and
in which the acquisition mode is the second mode.

Optionally, the transceiver unit is further configured to:
send the SI to the terminal through at least one SI window;
in which the at least one SI window is configured for merging and receiving the SI.

Optionally, the transceiver unit is further configured to:
send the SI to the terminal through at least one SI window;
in which the at least one SI window is configured for receiving the SI independently.

Optionally, the transceiver unit is further configured to:
send second indication information to the terminal;
in which the second indication information is configured to indicate that the validation duration of the first information is acquired within a first time domain range via the first mode, and/or
indicate that the validation duration of the first information is acquired within a second time domain range via the second mode.

Optionally, the second indication information is also configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is included in an SIB1.

Optionally, the first mode is an explicit acquisition mode, and the second mode is an implicit acquisition mode.

According to a fifth aspect of embodiments of the disclosure, a communication apparatus is provided. The apparatus includes a processor and a memory. The memory stores a computer program, and the processor executes the computer program stored in the memory to cause the apparatus to implement the validation time acquisition method described in the embodiment of the first aspect.

According to a sixth aspect of embodiments of the disclosure, a communication apparatus is provided. The apparatus includes a processor and a memory. The memory stores a computer program, and the processor executes the computer program stored in the memory to cause the apparatus to implement the validation time acquisition method described in the embodiment of the second aspect.

According to a seventh aspect of embodiments of the disclosure, a communication apparatus is provided. The apparatus includes a processor and an interface circuit. The interface circuit is configured to receive code instructions and transmit the code instructions to the processor, and the processor is configured to run the code instructions to implement the validation time acquisition method described in the embodiment of the first aspect.

According to an eighth aspect of embodiments of the disclosure, a communication apparatus is provided. The apparatus includes a processor and an interface circuit. The interface circuit is configured to receive code instructions and transmit the code instructions to the processor, and the processor is configured to run the code instructions to implement the validation time acquisition method described in the embodiment of the second aspect.

According to a ninth aspect of embodiments of the disclosure, a computer-readable storage medium for storing instructions is provided. When the instructions are executed, the validation time acquisition method described in the embodiment of the first aspect is implemented.

According to a tenth aspect of embodiments of the disclosure, a computer-readable storage medium for storing instructions is provided. When the instructions are executed, the validation time acquisition method described in the embodiment of the second aspect is implemented.

According to an eleventh aspect of embodiments of the disclosure, a computer program is provided. When the computer program is executed by a computer, the computer is caused to implement the validation time acquisition method described in the embodiment of the first aspect.

According to a twelfth aspect of embodiments of the disclosure, a computer program is provided. When the computer program is executed by a computer, the computer is caused to implement the validation time acquisition method described in the embodiment of the second aspect.

According to the validation duration acquisition method and the validation duration acquisition apparatus provided by the embodiments of the disclosure, the first indication information sent by the network device is received, in which the first indication information is configured to indicate the acquisition mode of the validation duration of the first information, and the acquisition mode includes a first mode and a second mode. The terminal may determine the acquisition mode of the validation duration of the first information according to an indication, and flexibly configures the acquisition mode of the validation duration, which may effectively improve an efficiency of information transmission, improve a robustness of communication system transmission, and in a case of updating the SI, ensure that the network device and the terminal may agree on a validation time of the updated SI.

Additional aspects and advantages of embodiments of the disclosure will be given in part in the following descriptions, become apparent in part from the following descriptions, or be learned from the practice of embodiments of the disclosure.

### BRIEF DESCRIPTION OF THE DRAWINGS

In order to clearly illustrate technical solutions of embodiments of the disclosure or background technologies, a description of drawings used in embodiments of the disclosure or the background technologies is given below.
FIG. 1a is a schematic diagram of a communication system according to an embodiment of the disclosure.
FIG. 1b is a schematic diagram of an uplink-downlink timing alignment transmission mode on a network device side.
FIG. 1c is a schematic diagram of an uplink-downlink timing misalignment transmission mode on a network device side.
FIG. 2 is a flowchart of a validation time acquisition method according to an embodiment of the disclosure.
FIG. 3 is a flowchart of a validation time acquisition method according to an embodiment of the disclosure.
FIG. 4 is a flowchart of a validation time acquisition method according to an embodiment of the disclosure.
FIG. 5 is a flowchart of a validation time acquisition method according to an embodiment of the disclosure.
FIG. 6 is a schematic diagram of a validation time acquisition apparatus according to an embodiment of the disclosure.
FIG. 7 is a schematic diagram of a validation time acquisition apparatus according to an embodiment of the disclosure.
FIG. 8 is a schematic diagram of another validation time acquisition apparatus according to an embodiment of the disclosure.
FIG. 9 is a schematic diagram of a chip according to an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" and "as if" as used herein may be interpreted as "when", "while" or "in response to determining".

Embodiments of the disclosure will be described in detail, examples of the embodiments are illustrated in the accompanying drawings, in which the same or similar reference numerals indicate the same or similar elements throughout. The embodiments described below with reference to the attached drawings are exemplary and are intended to explain the disclosure, but not to be construed as limiting the disclosure.

In order to better understand a validation time acquisition method disclosed in the embodiment of the disclosure, a communication system to which the embodiment of the disclosure is applicable will be described below.

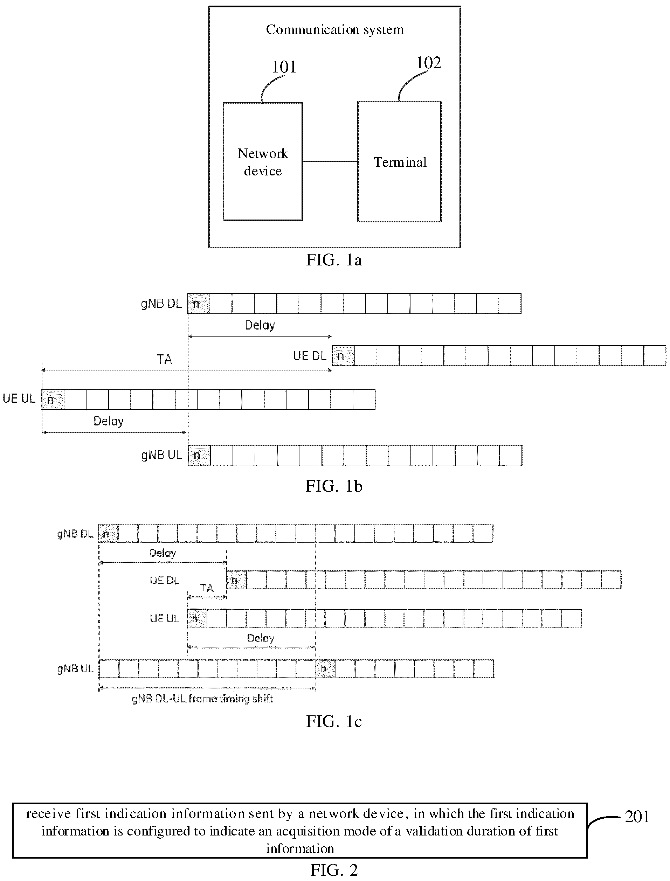

As illustrated in FIG. 1a, FIG. 1a is a structural diagram of a communication system according to an embodiment of the disclosure. The communication system may include, but is not limited to, a first network device, a second network device and a terminal. The number and the form of devices illustrated in FIG. 1a are only for examples and do not constitute a limitation on the embodiments of the disclosure, and two or more network devices and two or more terminals may be included in practical applications. The communication system illustrated in FIG. 1a includes, for example, a network device 101 and a terminal 102.

It is noteworthy that the technical solutions of the embodiments of the disclosure may be applied to various communication systems, such as, a long term evolution (LTE) system, a 5th generation mobile communication system (5G), a 5G new radio (NR) system, or other future new mobile communication systems.

The network device 101 in this embodiment of the disclosure is an entity on a network side for transmitting or receiving signals. For example, the network device 101 may be an evolved NodeB (eNB), a transmission reception point (TRP), a next generation NodeB (gNB) in the NR system, a base station in other future mobile communication systems, or an access node in a wireless fidelity (WiFi) system. The specific technology and specific device form adopted by the network device are not limited in the embodiments of the disclosure. The network device provided by this embodiment of the disclosure may be composed of a central unit (CU) and a distributed unit (DU). The CU may also be called a control unit. The use of CU-DU structure allows to divide a protocol layer of the network device, such as a base station, such that functions of some of the protocol layers are placed in the CU for a centralized control, and functions of some or all of the remaining protocol layers are distributed in the DU, and the DU is centrally controlled by the CU.

The terminal 102 in this embodiment of the disclosure is an entity on a user side for receiving or transmitting signals, such as a mobile phone. The terminal may also be referred to as a terminal, a user equipment (UE), a mobile station (MS), a mobile terminal (MT), and the like. The terminal may be a car with communication functions, a smart car, a mobile phone, a wearable device, an internet of things (IoT) device including a narrow band IoT (NB-IoT) and enhanced/massive machine type of communication ((e/m)MTC) and the like, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

With the continuous development of wireless communication technologies, the satellite communication is considered as an important aspect of future wireless communication technology. In the scene of satellite communication, there is a longer signal transmission distance between a transmitter and a receiver, which leads to a larger delay in data transmission. For transmissions with uplink-downlink relationships, in the current standardization discussion, a parameter of offset (Koffset) is determined to be introduced to compensate a transmission delay. As illustrated in FIGS. 1b and 1c, FIG. 1b is a schematic diagram of an uplink-downlink timing alignment transmission mode on a network device side, and FIG. 1c is a schematic diagram of an uplink-downlink timing misalignment transmission mode on a network device side.

The terminal may compensate the transmission delay by ephemeris information and related information of common timing advance (common TA). The ephemeris information and common TA information are notified to the terminal through system information (SI).

The terminal may believe that the previously acquired ephemeris information and the common TA information are available during a validation duration. The terminal needs to acquire the ephemeris information and the common TA information by reading the system information. Validation times of such information may be indicated directly in the system information or bound to a system information window (SI window).

However, for some terminals (such as IoT terminals), it may be necessary to merge and receive the SI of different SI windows to ensure a correct reception of the SI. If the validation time of such information is bound to the SI window, SI transmitted via different SI windows are different, and thus the terminal cannot merge and receive the SI in different SI windows.

It is understandable that the communication system described in this embodiment of the disclosure is intended to clearly illustrate the technical solutions according to the embodiments of the disclosure, and does not constitute a limitation on the technical solutions provided by the embodiments of the disclosure. It is understandable by those skilled in the art that as system architectures evolve and new service scenarios emerge, the technical solutions provided by the embodiments of the disclosure are also applicable to similar technical problems.

A validation time acquisition method and a validation time acquisition apparatus provided by this disclosure will be introduced in detail in combination with the attached drawings.

Refer to FIG2, FIG. 2 is a flowchart of a validation time acquisition method according to an embodiment of the disclosure. It should be noted that the validation time acquisition method according to this embodiment of the disclosure is executed by a terminal. The method may be executed independently or in combination with any other embodiment of the disclosure. As shown in FIG. 2, the method may include the following steps.

At step 201, first indication information sent by a network device is received, in which the first indication information is configured to indicate an acquisition mode of a validation time of first information.

In this embodiment of the disclosure, the terminal receives the first indication information sent by the network device, and determines the acquisition mode of the validation time of the first information according to an indication of the first indication information.

The acquisition mode includes a first mode and a second mode.

In this embodiment of the disclosure, the first mode is an explicit acquisition mode, and the second mode is an implicit acquisition mode.

The explicit acquisition mode means that the terminal may acquire the validation time by parsing a relevant information field in the SI, that is, information of the validation time is explicitly carried in the SI. The implicit acquisition mode means that the terminal implicitly acquires the validation time corresponding to the SI by parsing the SI, and this SI does not explicitly carry the information of the validation time.

In some implementations, if the first indication information indicates that the acquisition mode of the validation time is the first mode (that is, the explicit acquisition mode), the terminal may receive the SI sent by the network device, and determine the validation time of the first information according to a signaling carried in the SI.

In some implementations, if the first indication information indicates that the acquisition mode of the validation time is the first mode (that is, the explicit acquisition mode), the terminal may merge and receive the SI via at least one SI window.

It should be noted that "merging and receiving" means that if the terminal fails to receive the SI correctly in a first SI window and obtain the SI transmitted in the first SI window, the terminal continues to detect in at least one subsequent second SI window, and may merge and decode information received in the first SI window and information received in the at least one second SI window to obtain the SI.

It is understood that in the case of explicit acquisition mode, the SI explicitly carries a signaling for determining the validation time, so the SI transmitted by at least one SI window is the same, and thus the terminal may merge and receive the SI transmitted by the at least one SI window.

In some implementations, if the first indication information indicates that the acquisition mode of the validation time is the second mode (that is, the implicit acquisition mode), the terminal may receive the SI sent by the network device, and determine the validation time of the first information according to an end position of an SI window where the SI is located.

In some embodiments, if the first indication information indicates that the acquisition mode of the validation time is the second mode (that is, the implicit acquisition mode), the terminal independently receives the SI through each of at least one SI window.

It should be noted that "independently receiving" means that the terminal receives the SI based on a single SI window. If the terminal fails to correctly receive the SI in a third SI window and obtain the SI transmitted in the third SI window, the terminal will restart a detection and reception of the SI in a subsequent fourth SI window. If the terminal correctly receives the SI, the terminal may obtain the SI transmitted in the fourth SI window. If the terminal still fails to receive the SI correctly in the fourth SI window, the terminal will restart a detection and reception of the SI in a subsequent fifth SI window.

It is understood that in the case of implicit acquisition mode, the validation time of the first information is indicated in an implicit way. For example, the validation time is bound to the SI window, or the validation time is determined according to the end position of the SI window, or the validation time is determined implicitly by multiplexing a certain information field in the SI, etc. Therefore, multiple pieces of SI transmitted in different SI windows are different, and cannot be merged and received.

In this embodiment of the disclosure, optionally, the first indication information may be 1bit information and is configured to indicate the acquisition mode of the validation time of the first information. As an example, if the value of the first indication information is "1", it indicates that the acquisition mode of the validation time of the first information is the first mode (the explicit acquisition mode), and if the value of the first indication information is "0", it indicates that the acquisition mode of the validation time of the first information is the second mode (the implicit acquisition mode). Understandably, it may also be that if the value of the first indication information is "0", it indicates that the acquisition mode of the validation time of the first information is the first mode (the explicit acquisition mode), and if the value of the first indication information is "1", it indicates that the acquisition mode of the validation time of the first information is the second mode (the implicit acquisition mode).

In some implementations, the terminal may receive second indication information. The second indication information is configured to indicate that the validation time of the first information is acquired within a first time domain range via the first mode, and/or indicate that the validation time of the first information is acquired within a second time domain range via the second mode.

As a first possible implementation, the second indication information is configured to indicate that the validation time of the first information is acquired within the first time domain range via the first mode.

As a second possible implementation, the second indication information is configured to indicate that the validation time of the first information is acquired within the second time domain range via the second mode.

As a third possible implementation, the second indication information is configured to indicate that the validation time of the first information is acquired within the first time domain range via the first mode, and, the validation time of the first information is acquired within the second time domain range via the second mode.

It is understood that in this embodiment of the disclosure, the terminal may according to an indication of the second indication information, determine that in which time domain, the validation time is acquired by the explicit acquisition mode, and in which time domain, the validation time is acquired by the implicit acquisition mode.

Optionally, the second indication information is configured to indicate at least one of: a starting position of the first time domain range, an end position of the first time domain range, a time length of the first time domain range, a starting position of the second time domain range, an end position of the second time domain range, or a time length of the second time domain range.

In this embodiment of the disclosure, optionally, the first indication information is included in a system information block type 1 (SIB1).

Optionally, the first indication information and the second indication information may be carried in the same SI or in different SI. The second indication information may be included in a master information block (MIB), or other SI blocks (SIBx), such as the SIB1.

Optionally, the SI configured to acquire the validation time of the first information may be any SI other than SIB1.

Optionally, the first indication information and the second indication information may also be carried by other higher-layer signaling (such as a radio resource control (RRC) signaling), a medium access control (MAC) control element (CE) or a physical layer signaling.

In this embodiment of the disclosure, the first information may include ephemeris information and common TA information.

In conclusion, the first indication information sent by the network device is received, in which the first indication information is configured to indicate an acquisition mode of a validation time of first information, and the acquisition mode includes a first mode and a second mode. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

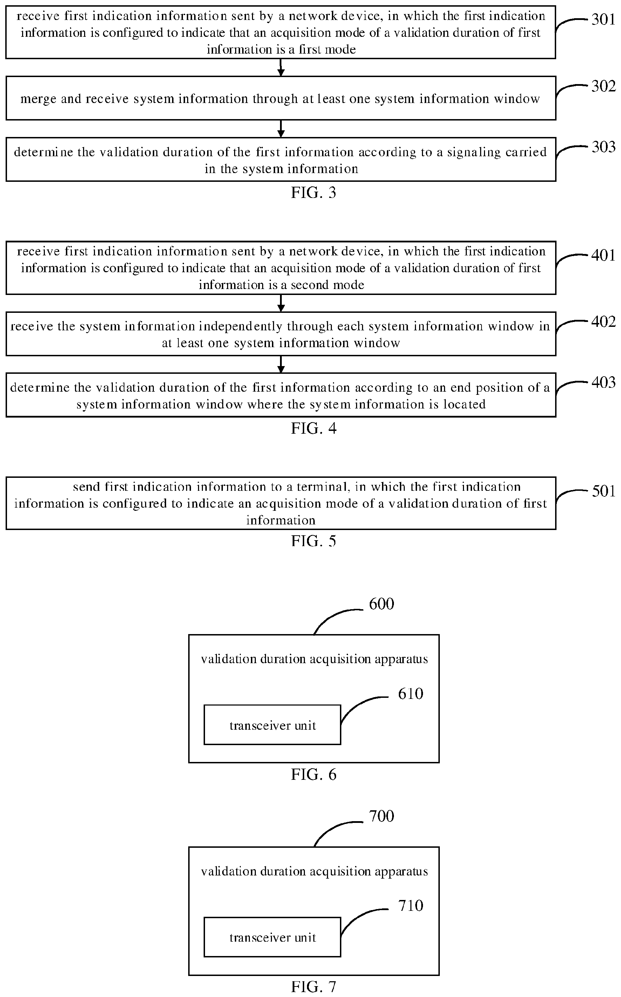

FIG. 3 is a flowchart of a validation time acquisition method according to an embodiment of the disclosure. It should be noted that the validation time acquisition method of this embodiment of the disclosure is executed by a terminal. The method may be performed independently or in combination with any other embodiment of the disclosure. As shown in FIG. 3, the method may include the following steps.

At step 301, first indication information sent by a network device is received, in which the first indication information is configured to indicate that an acquisition mode of a validation time of first information is a first mode.

In this embodiment of the disclosure, the terminal may receive the first indication information sent by the network device, and determines the acquisition mode of the validation time of the first information according to an indication of the first indication information.

In this embodiment of the disclosure, the acquisition mode of the validation time indicated by the first indication information is the first mode, i.e., an explicit acquisition mode.

The explicit acquisition mode means that the terminal may acquire the validation time by parsing relevant information fields in the SI, that is, information of the validation time is explicitly carried in the SI.

In some implementations, the terminal may also receive second indication information sent by the network device. The second indication information is configured to indicate the validation time of the first information is acquired within a first time domain range by the first mode.

Optionally, the second indication information is configured to indicate at least one of: a starting position of the first time domain range, an end position of the first time domain range, or a time length of the first time domain range.

In this embodiment of the disclosure, the terminal may determine the first time domain range, and explicitly acquire the validation time of the first information within the first time domain range. The terminal may merge and receive the SI within the first time domain range. That is, the terminal may merge and receive the SI transmitted by at least one SI window within the first time domain range.

In this embodiment of the disclosure, the first information may include ephemeris information and common TA information.

At step 302, SI is merged and received through at least one SI window.

In this embodiment of the disclosure, after determining that the acquisition mode is the explicit acquisition mode, the terminal may merge and receive the SI transmitted by at least one SI window. The SI carries a signaling for determining the validation time of the first information.

It is understood that the SI transmitted by the at least one SISI window is the same, so the terminal may merge and receive the SI transmitted by the at least one SI window.

It should be noted that "merging and receiving" means that if the terminal fails to receive the SI correctly in a first SI window and obtain the SI transmitted in the first SI window, the terminal continues to detect in at least one subsequent second SI window, and may merge and decode information received in the first SI window and information received in the at least one second SI window to obtain the SI.

At step 303, the validation time of the first information is determined according to a signaling carried in the SI.

In this embodiment of the disclosure, the terminal may merge and receive the SI through at least one SI window, and determine the validation time of the first information according to the signaling carried in the SI. The signaling carried in the SI is configured to determine the validation time of the first information. The network device may explicitly indicates the validation time of the first information to the terminal through the signaling.

In conclusion, the first indication information sent by the network device is received, in which the first indication information is configured to indicate that the acquisition mode of the validation time of the first information is the first mode. The SI is merged and received through at least one SI window. The validation time of the first information is determined according to the signaling carried in the SI. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

FIG. 4 is a flowchart of a validation time acquisition method according to an embodiment of the disclosure. It should be noted that the validation time acquisition method of this embodiment of the disclosure is executed by a terminal. The method may be performed independently or in combination with any other embodiment of the disclosure. As shown in FIG. 4, the method may include the following steps.

At step 401, first indication information sent by a network device is received, in which the first indication information is configured to indicate that an acquisition mode of a validation time of first information is a second mode.

In this embodiment of the disclosure, the terminal may receive the first indication information sent by the network device, and determine the acquisition mode of the validation time of the first information according to an indication of the first indication information.

In this embodiment of the disclosure, the acquisition mode of the validation time indicated by the first indication information is a second mode, i.e., an implicit acquisition mode.

The implicit acquisition mode means that the terminal implicitly acquires the validation time corresponding to the SI by parsing the SI. The SI does not explicitly carry information of the validation time.

In some implementations, the terminal may receive second indication information sent by the network device. The second indication information is configured to indicate the validation time of the first information is acquired within a second time domain range by the second mode.

Optionally, the second indication information is configured to indicate at least one of: a starting position of the second time domain range, an end position of the second time domain range, or a time length of the second time domain range.

In this embodiment of the disclosure, the terminal determines the second time domain range, and implicitly acquires the validation time of the first information within the second time domain range. The terminal may independently receive the SI within the second time domain range. That is, the terminal may independently receive the SI transmitted by each SI window in at least one SI window within the second time domain range.

In this embodiment of the disclosure, the first information may include ephemeris information and common TA information.

At step 402, SI is received independently through each SI window in at least one SI window.

In this embodiment of the disclosure, the terminal acquires the validation time of the first information by an implicit way, and the terminal independently receives the SI through each of at least one SI window and then determine the validation time of the first information.

It should be noted that "independently receiving" means that the terminal receives the SI based on a single SI window. If the terminal fails to correctly receive the SI in a third SI window and obtain the SI transmitted in the third SI window, the terminal will restart a detection and reception of the SI in a subsequent fourth SI window. If the terminal correctly receives the SI, the terminal may obtain the SI transmitted in the fourth SI window. If the terminal still fails to receive the SI correctly in the fourth SI window, the terminal will restart a detection and reception of the SI in a subsequent fifth SI window.

It is understood that in the case of implicit acquisition mode, the validation time of the first information is indicated in an implicit way. For example, the validation time is bound to the SI window, or the validation time is determined according to the end position of the SI window. Therefore, multiple pieces of SI transmitted in different SI windows are different, and cannot be merged and received.

At step 403, the validation time of the first information is determined according to an end position of an SI window where the first information is located.

In this embodiment of the disclosure, multiple pieces of SI transmitted in the at least one SI window do not explicitly carry a signaling for determining the validation time of the first information, but indicate the validation time of the first information in an implicit way. The terminal independently receives the SI through the SI window, and determines the validation time of the first information according to the end position of the SI window where the SI is located.

In conclusion, the first indication information sent by the network device is received, in which the first indication information is configured to indicate that the acquisition mode of the validation time of the first information is the second mode. The SI is independently received through each SI window in at least one SI window. The validation time of the first information is determined according the end position of the SI window where the SI is located. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

FIG. 5 is a flowchart of a validation time acquisition method according to an embodiment of the disclosure. It should be noted that the validation time acquisition method of this embodiment of the disclosure is executed by a network device. The method may be performed independently or in combination with any other embodiment of the disclosure. As shown in FIG. 5, the method may include the following steps.

At step 501, first indication information is sent to a terminal, in which the first indication information is configured to indicate an acquisition mode of a validation time of first information.

In this embodiment of the disclosure, the network device may send the first indication information to the terminal, and the terminal may determine the acquisition mode of the validation time of the first information according to an indication of the first indication information.

The acquisition mode includes a first mode and a second mode.

In this embodiment of the disclosure, the first mode is an explicit acquisition mode, and the second mode is an implicit acquisition mode.

The explicit acquisition mode means that the terminal may acquire the validation time by parsing a relevant information field in the SI, that is, information of the validation time is explicitly carried in the SI. The implicit acquisition mode means that the terminal implicitly acquires the validation time corresponding to the SI by parsing the SI, and this SI does not explicitly carry the information of the validation time.

In some implementations, if the first indication information indicates that the acquisition mode of the validation time is the first mode (that is, the explicit acquisition mode), the network device may send the SI to the terminal. The SI carries a signaling, which is configured to determine the validation time of the first information.

In some implementations, if the first indication information indicates that the acquisition mode of the validation time is the first mode (that is, the explicit acquisition mode), the network device may sends the SI to the terminal through at least one SI window. The at least one SI window is configured for merging and receiving the SI.

It should be noted that "merging and receiving" means that if the terminal fails to receive the SI correctly in a first SI window and obtain the SI transmitted in the first SI window, the terminal continues to detect in at least one subsequent second SI window, and may merge and decode information received in the first SI window and information received in the at least one second SI window to obtain the SI.

It is understood that in the case of explicit acquisition mode, the SI explicitly carries a signaling for determining the validation time, so the SI transmitted by at least one SI window is the same, and thus the terminal may merge and receive the SI transmitted by the at least one SI window.

In some implementations, if the first indication information indicates that the acquisition mode of the validation time is the second mode (that is, the implicit acquisition mode), the network device may send the SI to the terminal, and the validation time of the first information may be determined according to an end position of an SI window where the SI is located.

In some implementations, if the first indication information indicates that the acquisition mode of the validation time is the second mode (that is, the implicit acquisition mode), the network device may send the SI to the terminal through at least one SI window. The at least one SI window is configured to receive the SI independently.

It should be noted that "independently receiving" means that the terminal receives the SI based on a single SI window. If the terminal fails to correctly receive the SI in a third SI window and obtain the SI transmitted in the third SI window, the terminal will restart a detection and reception of the SI in a subsequent fourth SI window. If the terminal correctly receives the SI, the terminal may obtain the SI transmitted in the fourth SI window. If the terminal still fails to receive the SI correctly in the fourth SI window, the terminal will restart a detection and reception of the SI in a subsequent fifth SI window.

It is understood that in the case of implicit acquisition mode, the validation time of the first information is indicated in an implicit way. For example, the validation time is bound to the SI window, or the validation time is determined according to the end position of the SI window, or the validation time is determined implicitly by multiplexing a certain information field in the SI, etc. Therefore, multiple pieces of SI transmitted in different SI windows are different, and cannot be merged and received.

In this embodiment of the disclosure, optionally, the first indication information may be 1bit information and is configured to indicate the acquisition mode of the validation time of the first information. As an example, if the value of the first indication information is "1", it indicates that the acquisition mode of the validation time of the first information is the first mode (the explicit acquisition mode), and if the value of the first indication information is "0", it indicates that the acquisition mode of the validation time of the first information is the second mode (the implicit acquisition mode). Understandably, it may also be that if the value of the first indication information is "0", it indicates that the acquisition mode of the validation time of the first information is the first mode (the explicit acquisition mode), and if the value of the first indication information is "1", it indicates that the acquisition mode of the validation time of the first information is the second mode (the implicit acquisition mode).

In some implementations, the network device may send second indication information to the terminal. The second indication information is configured to indicate that the validation time of the first information is acquired within a first time domain range via the first mode, and/or indicate that the validation time of the first information is acquired within a second time domain range via the second mode.

As a first possible implementation, the second indication information is configured to indicate that the validation time of the first information is acquired within the first time domain range via the first mode.

As a second possible implementation, the second indication information is configured to indicate that the validation time of the first information is acquired within the second time domain range via the second mode.

As a third possible implementation, the second indication information is configured to indicate that the validation time of the first information is acquired within the first time domain range via the first mode, and the validation time of the first information is acquired within the second time domain range via the second mode.

It is understood that in this embodiment of the disclosure, the terminal may according to an indication of the second indication information, determine that in which time domain, the validation time is acquired by the explicit acquisition mode, and in which time domain, the validation time is acquired by the implicit acquisition mode.

Optionally, the second indication information is used to indicate at least one of: a starting position of the first time domain range, an end position of the first time domain range, a time length of the first time domain range, a starting position of the second time domain range, an end position of the second time domain range, or a time length of the second time domain range.

In this embodiment of the disclosure, optionally, the first indication information is included in an SIB1.

Optionally, the first indication information and the second indication information may be carried in the same SI or in different SI. The second indication information may be included in a MIB, or any other SIB (SIBx).

Optionally, the first indication information and the second indication information may also be carried by other higher-layer signaling (such as an RRC signaling), a MAC CE or a physical layer signaling.

Optionally, the SI configured to acquire the validation time of the first information may be any SI other than SIB1.

In this embodiment of the disclosure, the first information may include ephemeris information and common TA information.

In conclusion, the first indication information is sent to the terminal, in which the first indication information is configured to indicate the acquisition mode of the validation time of the first information, and the acquisition mode includes a first mode and a second mode. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

Corresponding to the validation time acquisition methods according to the above-mentioned several embodiments, the disclosure also provides a validation time acquisition apparatus. Since the validation time acquisition apparatus provided by the embodiments of the disclosure corresponds to the validation time acquisition methods provided by the above-mentioned several embodiments, the implementations of the validation time acquisition methods are also applicable to the validation time acquisition apparatus provided by the following embodiments, which will not be described in detail.

FIG. 6 is a schematic diagram of a validation time acquisition apparatus according to an embodiment of the disclosure.

As illustrated in FIG. 6, the validation time acquisition apparatus 600 includes: a transceiver unit 610.

The transceiver unit 610 is configured to receive first indication information sent by a network device,
in which the first indication information is configured to indicate an acquisition mode of a validation time of first information, and the acquisition mode comprises a first mode and a second mode.

Optionally, the transceiver unit 610 is further configured to:
receive SI sent by the network device; and
determine the validation time of the first information according to a signaling carried in the SI;
in which the acquisition mode is the first mode.

Optionally, the transceiver unit 610 is further configured to:
receive SI sent by the network device;
determine the validation time of the first information according to an end position of an SI window where the SI is located;
in which the acquisition mode is the second mode.

Optionally, the transceiver unit 610 is further configured to:
merge and receive the SI through at least one SI window.

Optionally, the transceiver unit 610 is further configured to:
receive the SI independently through each SI window in at least one SI window.

Optionally, the transceiver unit 610 is further configured to:
receive second indication information sent by the network device;
in which the second indication information is configured to indicate that the validation time of the first information is acquired within a first time domain range via the first mode, and/or
indicate that the validation time of the first information is acquired within a second time domain range via the second mode.

Optionally, the second indication information is further configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is comprised in an SIB1.

Optionally, the first mode is an explicit acquisition mode, and the second mode is an implicit acquisition mode.

According to the validation time acquisition apparatus of this embodiment, the first indication information sent by the network device may be received, in which the first indication information is configured to indicate the acquisition mode of the validation time of the first information, and the acquisition mode includes a first mode and a second mode. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

FIG. 7 is a schematic diagram of a validation time acquisition apparatus provided by an embodiment of the disclosure.

As illustrated in FIG. 7, the validation time acquisition apparatus 700 includes: a transceiver unit 710.

The transceiver unit 710 is configured to send first indication information to a terminal,
in which the first indication information is configured to indicate an acquisition mode of a validation time of first information, and the acquisition mode comprises a first mode and a second mode.

Optionally, the transceiver unit 710 is further configured to:
send SI to the terminal;
in which the SI carries a signaling, the signaling is configured to determine the validation time of the first information; and
the acquisition mode is the first mode.

Optionally, the transceiver unit 710 is further configured to:
send SI to the terminal;
in which an end position of an SI window where the SI is located is configured to determine the validation time of the first information;
the acquisition mode is the second mode.

Optionally, the transceiver unit 710 is further configured to:
send SI to the terminal through at least one SI window;
in which the at least one SI window is configured for merging and receiving the SI.

Optionally, the transceiver unit 710 is further configured to:
send SI to the terminal through at least one SI window;
in which the at least one SI window is configured for receiving the SI independently.

Optionally, the transceiver unit 710 is further configured to:
send second indication information to the terminal;
in which the second indication information is configured to indicate that the validation time of the first information is acquired within a first time domain range via the first mode, and/or
indicate that the validation time of the first information is acquired within a second time domain range via the second mode.

Optionally, the second indication information is further configured to indicate at least one of:
a starting position of the first time domain range;
an end position of the first time domain range;
a time length of the first time domain range;
a starting position of the second time domain range;
an end position of the second time domain range; or
a time length of the second time domain range.

Optionally, the first indication information is included in an SIB1.

Optionally, the first mode is an explicit acquisition mode, and the second mode is an implicit acquisition mode.

According to the validation time acquisition apparatus of this embodiment, the first indication information is sent to the terminal, in which the first indication information is configured to indicate an acquisition mode of a validation time of first information, and the acquisition mode comprises a first mode and a second mode. The terminal may determine the acquisition mode of the validation time of the first information according to an indication, and flexibly configures the acquisition mode of the validation time, which may effectively improve an efficiency of information transmission, improve a robustness of communication system transmission, and in a case of updating the SI, ensure that the network device and the terminal may agree on a validation time of the updated SI.

In order to realize the above embodiments, an embodiment of the disclosure provides a communication apparatus, including a processor and a memory. The memory stores a computer program, and the processor executes the computer program stored in the memory to cause the apparatus to implement the method shown in the embodiments of FIGS. 2-4.

In order to realize the above embodiments, an embodiment of the disclosure provides a communication apparatus, including a processor and a memory. The memory stores a computer program, and the processor executes the computer program stored in the memory to cause the apparatus to implement the method shown in the embodiment of FIG. 5.

In order to realize the above embodiments, an embodiment of the disclosure provides a communication apparatus, including a processor and an interface circuit. The interface circuit is configured to receive code instructions and transmit the code instructions to the processor, and the processor is configured to run the code instructions to implement the method shown in embodiments of FIGS. 2-4.

In order to realize the above embodiments, an embodiment of the disclosure provides a communication apparatus, including a processor and an interface circuit. The interface circuit is configured to receive code instructions and transmit the code instructions to the processor, and the processor is configured to run the code instructions to implement the method shown in embodiment of FIG. 5.

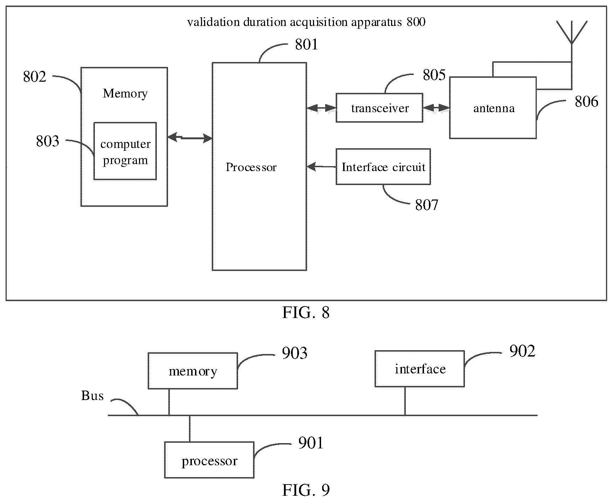

As illustrated in FIG. 8, FIG. 8 is a schematic diagram of another validation time acquisition apparatus 800 provided by an embodiment of the disclosure. The validation time acquisition apparatus 800 may be a terminal, a network device, or a chip, a chip system or a processor that supports the network device to realize the above-described methods, or a chip, a chip system or a processor that supports the terminal to realize the above-described methods. The apparatus may be configured to realize the methods described in the above method embodiments with reference to the description of the above-described method embodiments.

The validation time acquisition apparatus 800 may include one or more processors 801. The processor 801 may be a general purpose processor or a dedicated processor, such as, a baseband processor or a central processor. The baseband processor is configured for processing communication protocols and communication data. The central processor is configured for controlling the validation time acquisition apparatus (e.g., a base station, a baseband chip, a terminal, a terminal chip, a DU, or a CU), executing computer programs, and processing data of the computer programs.

Optionally, the validation time acquisition apparatus 800 may include one or more memories 802, on which a computer program 803 may be stored. The processor 801 executes the computer program 803 to cause the validation time acquisition apparatus 800 to perform the methods described in the above method embodiments. The computer program 803 may be solidified in the processor 801, in which case, the processor 801 may be implemented by hardware.

Optionally, data may also be stored in the memory 802. The validation time acquisition apparatus 800 and the memory 802 may be provided separately or may be integrated together.

Optionally, the validation time acquisition apparatus 800 may also include a transceiver 805 and an antenna 806. The transceiver 805 may be referred to as a transceiver unit, a transceiver machine, or a transceiver circuit, for realizing a transceiver function. The transceiver 805 may include a receiver and a transmitter. The receiver may be referred to as a receiver machine or a receiving circuit, for realizing a receiving function. The transmitter may be referred to as a transmitter machine or a transmitting circuit, for realizing a transmitting function.

Optionally, the validation time acquisition apparatus 800 may also include one or more interface circuits 807. The interface circuits 807 are configured to receive code instructions and transmit the code instructions to the processor 801. The processor 801 runs the code instructions to cause the validation time acquisition apparatus 800 to perform the method described in the method embodiments.

In an implementation, the processor 801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit de scribed above may be configured for code/data reading and writing, or may be configured for signal transmission or delivery.

In an implementation, the validation time acquisition apparatus 800 may include circuits. The circuits may implement sending, receiving or communicating functions in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The validation time acquisition apparatus in the above description of embodiments may be a network device or a terminal, but the scope of the validation time acquisition apparatus described in the disclosure is not limited thereto, and the structure of the validation time acquisition apparatus is not limited by FIGS. 6 and 7. The validation time acquisition apparatus may be an independent device or may be a part of a larger device. For example, the described validation time acquisition apparatus may be:
(1) an independent IC, chip, chip system or subsystem;
(2) a collection of ICs including one or more ICs, optionally, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

The case where the validation time acquisition apparatus may be a chip or a chip system may be referred to the schematic diagram of a chip shown in FIG. 9. In FIG. 9, the chip includes a processor 901 and an interface 902. There may be one or more processors 901, and there may be a plurality of interfaces 902.

For the case where the chip is configured to realize the functions of the network device in the embodiments of the disclosure,
the interface 902 is configured to receive code instructions and transmit the code instructions to the processor;
the processor 901 is configured to run the code instructions to implement the method in FIGS. 2-4.

For the case where the chip is configured to realize the functions of the terminal in the embodiments of the disclosure,
the interface 902 is configured to receive code instructions and transmit the code instructions to the processor;
the processor 901 is configured to run the code instructions to implement the method in FIG. 5.

Optionally, the chip further includes a memory 903 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the disclosure also provides a communication system. The system includes the validation time acquisition apparatus as a terminal and the validation time acquisition apparatus as a network device in the embodiments of FIGS. 6-7, or the system includes the validation time acquisition apparatus as a terminal and the validation time acquisition apparatus as a network device in the embodiment of FIG. 8.

The disclosure also provides a readable storage medium having instructions stored thereon. When the instructions are executed by a computer, the functions of any of the method embodiments described above is implemented.

The disclosure also provides a computer program product. When the computer program product is executed by a computer, the functions of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

It should be understood that steps may be reordered, added or deleted using the various forms of flowcharts shown above. For example, the steps described in the embodiments of the disclosure may be executed in parallel, sequentially or in a different order, so long as the desired result of the technical scheme disclosed in the disclosure may be achieved, which is not limited in the disclosure.

The above specific implementations do not limit the scope of protection of the disclosure. It should be understood by those skilled in the art that various modifications, combinations, sub-combinations and substitutions may be made according to design requirements and other factors. Any modification, equivalent substitution and improvement made within the spirit and principle of the disclosure should be included in the protection scope of the disclosure.

## Claims

1. A validation time acquisition method, performed by a terminal, comprising:
receiving first indication information sent by a network device;
wherein the first indication information is configured to indicate an acquisition mode of a validation time of first information, and the acquisition mode comprises a first mode and a second mode.

2. The method of claim 1, further comprising:
receiving system information (SI) sent by the network device; and
determining the validation time of the first information according to a signaling carried in the SI;
wherein the acquisition mode is the first mode.

3. The method of claim 1, further comprising:
receiving SI sent by the network device; and
determining the validation time of the first information according to an end position of an SI window where the SI is located;
wherein the acquisition mode is the second mode.

4. The method of claim 2, further comprising:
merging and receiving the SI through at least one SI window.

5. The method of claim 3, further comprising:
receiving the SI independently through each SI window in at least one SI window.

6. The method of any one of claims 1-5, further comprising:
receiving second indication information sent by the network device;
wherein the second indication information is configured to indicate that the validation time of the first information is acquired within a first time domain range via the first mode, and/or
indicate that the validation time of the first information is acquired within a second time domain range via the second mode.

7. The method of claim 6, wherein the second indication information is further configured to indicate at least one of:
a starting position of the first time domain range;
an end position of the first time domain range;
a time length of the first time domain range;
a starting position of the second time domain range;
an end position of the second time domain range; or
a time length of the second time domain range.

8. The method of claim 1, wherein the first indication information is comprised in an SIblock type 1 (SIB1).

9. The method of any one of claims 1-8, wherein the first mode is an explicit acquisition mode, and the second mode is an implicit acquisition mode.

10. A validation time acquisition method, performed by a network device, comprising:
sending first indication information to a terminal;
wherein the first indication information is configured to indicate an acquisition mode of a validation time of first information, and the acquisition mode comprises a first mode and a second mode.

11. The method of claim 10, further comprising:
sending system information (SI) to the terminal;
wherein the SI carries a signaling, the signaling is configured to determine the validation time of the first information; and
wherein the acquisition mode is the first mode.

12. The method of claim 10, further comprising:
sending SI to the terminal;
wherein an end position of an SI window where the SI is located is configured to determine the validation time of the first information; and
wherein the acquisition mode is the second mode.

13. The method of claim 11, further comprising:
sending the SI to the terminal through at least one SI window;
wherein the at least one SI window is configured for merging and receiving the SI.

14. The method of claim 12, further comprising:
sending the SI to the terminal through at least one SI window;
wherein the at least one SI window is configured for receiving the SI independently.

15. The method of any one of claims 10-14, further comprising:
sending second indication information to the terminal;
wherein the second indication information is configured to indicate that the validation time of the first information is acquired within a first time domain range via the first mode, and/or
indicate that the validation time of the first information is acquired within a second time domain range via the second mode.

16. The method of claim 15, wherein the second indication information is further configured to indicate at least one of:
a starting position of the first time domain range;
an end position of the first time domain range;
a time length of the first time domain range;
a starting position of the second time domain range;
an end position of the second time domain range; or
a time length of the second time domain range.

17. The method of claim 10, wherein the first indication information is comprised in an SI block type 1 (SIB1).

18. The method of any one of claims 10-17, wherein the first mode is an explicit acquisition mode, and the second mode is an implicit acquisition mode.

19. A validation time acquisition apparatus, comprising:
a transceiver unit, configured to receive first indication information sent by a network device;
wherein the first indication information is configured to indicate an acquisition mode of a validation time of first information, and the acquisition mode comprises a first mode and a second mode.

20. A validation time acquisition apparatus, comprising:
a transceiver unit, configured to send first indication information to a terminal;
wherein the first indication information is configured to indicate an acquisition mode of a validation time of first information, and the acquisition mode comprises a first mode and a second mode.

21. A communication apparatus, comprising a processor and a memory, wherein the memory stores a computer program, and the processor executes the computer program stored in the memory to cause the apparatus to implement the method of any one of claims 1-9.

22. A communication apparatus, comprising a processor and a memory, wherein the memory stores a computer program, and the processor executes the computer program stored in the memory to cause the apparatus to implement the method of any one of claims 10-18.

23. A communication apparatus, comprising a processor and an interface circuit;
wherein the interface circuit is configured to receive code instructions and transmit the code instructions to the processor; and
wherein the processor is configured to run the code instructions to implement the method of any one of claims 1-9.

24. A communication apparatus, comprising a processor and an interface circuit;
wherein the interface circuit is configured to receive code instructions and transmit the code instructions to the processor; and
wherein the processor is configured to run the code instructions to implement the method of any one of claims 10-18.

25. A computer-readable storage medium for storing instructions, wherein when the instructions are executed, the method of any one of claims 1-9 is implemented.

26. A computer-readable storage medium for storing instructions, wherein when the instructions are executed, the method of any one of claims 10-18 is implemented.
